# EUROPEAN PATENT APPLICATION

(11) **EP 4 538 073 A1**
(43) Date of publication of application: **16.04.2025**
(21) Application number: 24315467.1
(22) Date of filing: 10.10.2024
(51) Int. Cl.: B60H 1/00, B60H 1/32

(54) **IMPROVED HEAT MANAGEMENT SYSTEM FOR A VEHICLE**

(30) Priority: 12.10.2023 IT 202300021294
(71) Applicant: IVECO FRANCE S.A.S., 69200 Vénissieux (FR)
(72) Inventor: Briki, Haythem, 69200 VENISSIEUX (FR)
(74) Representative: Studio Torta S.p.A.

(57) **Abstract**

Heat management system (1) for a vehicle provided with a plurality of first heat exchangers (2) configured to heat the air within internal space of the vehicle and at least one second heat exchanger (3) configured to cool the air within internal space, the heat management system (1) comprising a heat pump assembly (10; 100) configured to heat up and/or cool down an operative fluid configured to flow with the heaters (2, 3) to exchange thermal energy with the air of the internal space.

## Description

### CROSS-REFERENCE TO RELATED APPLICATIONS

This patent application claims priority from Italian patent application no. 102023000021294 filed on October 12, 2023, the entire disclosure of which is incorporated herein by reference.

### TECHNICAL FIELD

The present invention concerns a heat management system for a vehicle.

The present invention finds its preferred, although not exclusive, application in at least partial electric traction public transport vehicle. Reference will be made to this application by way of example below.

### BACKGROUND OF THE INVENTION

Public transport vehicles tend to be realized as partial electric traction or purely electric traction vehicles in order to reduce the pollutant emissions due to the use of internal combustion engines.

Hybrid vehicles, electric vehicles or fuel cell vehicles are examples of the above at least partial electric traction vehicles.

Such vehicles use electric energy store in electric battery means in order to allow traction of the vehicle and the operation of different functional system of the vehicle, inter alia the conditioning system.

Conditioning of the interior of a public transport vehicle is a crucial comfort parameter for the travellers and conditioning system is one of the most energy-consuming system of the vehicle except for the traction system.

Current system uses refrigeration cycle systems that are particularly energy-consuming and that are mainly dedicated to the air conditioning of passengers compartment and driver area. Such refrigeration cycle systems used known chillers that uses, moreover, R134a fluid that will be prohibited in the next years.

Indeed, R134a have a GWP (global warm potential) that is so high that will be not allowed in the future.

Alternatively, electric heaters or even Diesel/HVO (hydro vegetable oils) autonomous heaters are used for heating the internal space in winter.

Clearly, the use of energy-consuming refrigeration cycle systems and electric heaters reduces the operative range of the vehicle since they consume heavily battery vehicle stored energy that cannot be used for traction.

Furthermore, Diesel/HVO autonomous heaters clearly emit pollutant emissions that should be avoided.

Moreover, heating management is also required for over operative systems of the vehicles such as electric batteries that needs to be maintained within a pre-set temperature range.

Therefore, the need is felt to improve existing heat management systems for public transport vehicle in order to provide efficient conditioning of the internal space of the vehicle, of operative system thereof while at the same time reducing the energy consumption in order to reduce fuel consumption or increase operative range of the vehicle.

An aim of the present invention is to satisfy the above-mentioned needs in a cost-effective and optimized manner.

### SUMMARY OF THE INVENTION

The mentioned aim is reached by heat management system and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic representation of a first embodiment of a thermal management system according to the present disclosure;
- Figure 2 is a schematic representation of a second embodiment of a thermal management system according to the present disclosure;
- Figure 3 is a schematic representation of a third embodiment of a thermal management system according to the present disclosure;

- Figure 4 is a schematic representation of a fourth embodiment of a thermal management system according to the present disclosure;
- Figure 5 is a schematic representation of a fifth embodiment of a thermal management system according to the present disclosure;
- Figure 6 is a schematic representation of a sixth embodiment of a thermal management system according to the present disclosure; and
- Figure 7 is a schematic representation of a heat pump assembly embodiment used in the thermal management system according to the present disclosure.

### DETAILED DESCRIPTION OF THE INVENTION

The attached figures disclose different embodiments of a heat management system 1 for a vehicle according to the invention.

The vehicle (not shown) is preferably a public transport vehicle and had at least a partial traction. Moreover, the vehicle essentially comprises a plurality of heat exchangers, namely a plurality of first heat exchangers 2, in detail configured to heat the internal space of the vehicle (in the following called "heaters" for simplicity), and at least a second heat exchanger 3, in particular a front heat exchanger, in the following called "heater/cooler" configured to heat or, more commonly, cool the internal space of the vehicle and, in some embodiments, electric battery means 4 and a fuel cell module 5.

The heat management system 1 essentially comprises a heat pump assembly 10 provided with a first and a second portions 10', 10''.

As per se known, the first portion 10' is configured to use electrical energy to absorb heat from the environment to vary the temperature in an operative fluid passing through, via known refrigeration cycle apparatus, while the second portion 10' is configured to allow exchange of heat between the operative fluid of the refrigeration cycle apparatus and a carrier fluid. Such carrier fluid then flows towards the aforementioned heat exchangers 2, 3 in the inner space of the vehicle and may be water.
10' .

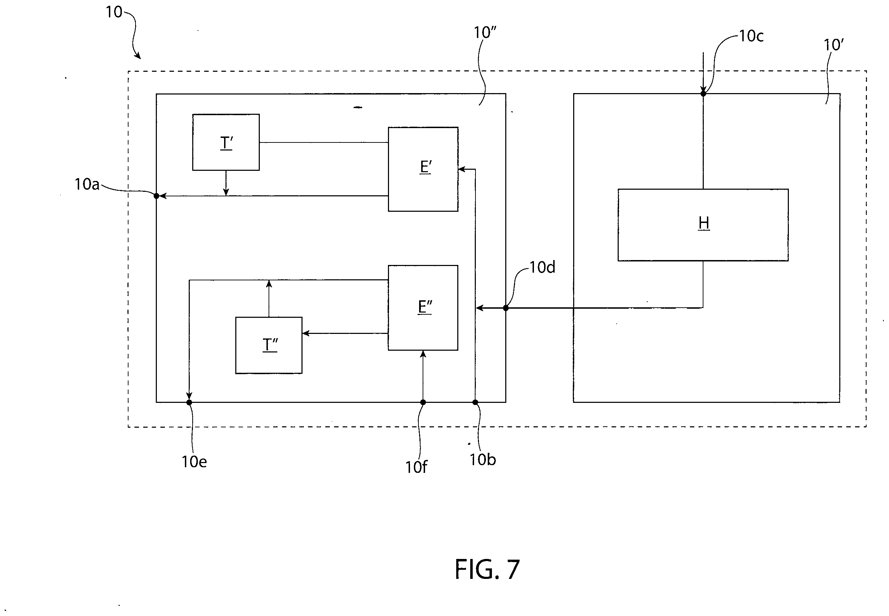

In particular, Figure 7 discloses a schematic representation in greater detail of an embodiment of such heat pump assembly 10.

As said, first portion 10' comprises (not shown) a refrigeration cycle apparatus, well known in the art, and comprising, as known compressor means, a condenser, an expander, an evaporator, cycle-disposed to allow physical transformation of an operative fluid.

In the disclosed example, the refrigeration cycle apparatus operates with CO₂ gas as operative fluid, therefore heat pump assembly 10 is a CO₂ heat pump.

The heat pump assembly 10 defines a first outlet 10a configured to allow the exit of the operative fluid at a first temperature range value, a first inlet 10b configured to allow the entrance of the operative fluid at a second temperature range value, a second inlet 10c configured to allow the entrance of the operative fluid at the aforementioned first temperature range value, a second outlet 10d configured to allow the exit of the operative fluid at the aforementioned second temperature range value, a third outlet 10e configured to allow the exit of the operative fluid at a third temperature range value and a third inlet 10f configured to allow the entrance of the operative fluid at the aforementioned third temperature range value.

In detail, first and third outlet 10a, 10f are realized on the second portion 10'' such as the first and third inlets 10b, 10e. Differently, the second outlet 10d is realized in the second portion 10'' while the second inlet 10c is realized in the first portion 10'.

Second portion 10" comprise a first heat exchanger E' configured to allow exchange with the vehicle operative fluid, e.g. water, and the heat pump operative fluid, i.e. the refrigerant. In particular, the first heat exchanger E' is configured to absorb heat from the heat pump operative fluid, therefore e.g. the first heat exchanger E' is placed nearby a condenser of the heat pump assembly.

The first heat exchanger E' is configured to receive the vehicle operative fluid coming from the first inlet 10b, increasing its temperature, and sending to the first outlet 10a. Preferably a first tank T' can be provided fluidly in parallel between the first heat exchanger E' and the conduits connecting this latter to first outlet 10a (or inlet 10b) to manage operative fluid level.

Second portion 10" comprise a second heat exchanger E" configured to allow exchange with the vehicle operative fluid, e.g. water, and the heat pump operative fluid, i.e. the refrigerant. In particular, the second heat exchanger E" is configured to provide heat to the heat pump operative fluid, therefore e.g. the second heat exchanger E" is placed nearby an evaporator of the heat pump assembly.

The second heat exchanger E" is configured to receive the vehicle operative fluid coming from the third inlet 10f, decreasing its temperature, and sending to the third outlet 10e. Preferably a second tank T'' can be provided fluidly in parallel between the second heat exchanger E" and the conduits connecting this latter to third outlet 10e (or inlet 10f) to manage operative fluid level.

Preferably, the vehicle operative fluid flowing between the second inlet 10c and the second outlet 10d is used by a safety heat exchanger H configured, for instance, to avoid icing of condenser/evaporator housed in the first portion 10' .

Advantageously, the first temperature range value has a temperature greater than the second temperature range value that has a temperature greater than the third temperature range value. For sake of example, the first temperature range value may contain water at a temperature of about 65° and the third temperature range value may contain water at a temperature of about 10°.

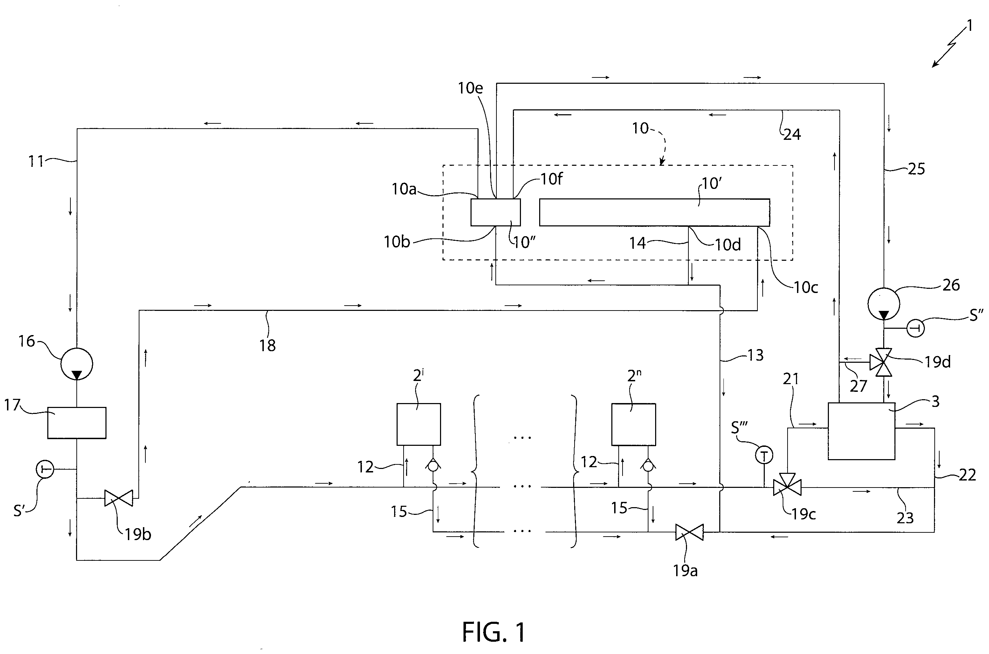

Making reference to the first embodiment (figure 1), the first outlet 10a of the heat pump assembly 10 is fluidly connected by a first conduit 11 to heaters 2. Each heater 2 is connected to the first conduit 11 via a first support conduit 12. In the shown embodiment two heaters 2ⁱ to 2ⁿ is shown, where n can be a variable integer number.

Downstream, heaters 2 are fluidly connected to the first inlet 2b via a second conduit 13. Similar to the preceding, the second conduit 13 is fluidly connected to each heater 2 via a second support conduit 15.

The heat management system 1 further comprises first valve means 19a fluidly interposed on the third conduit 13 downstream to all heaters 2 in order to regulate the flow coming from these latter towards the heat pump assembly 10.

It is further noticed that the second outlet 10c is fluidly connected to the second conduit 13 via a third conduit 14 downstream to heaters 2.

The heat management system 1 further comprises pumping means 16 configured to allow circulation of fluid through heaters 2, i.e. forcing fluid to flow from the heat pump assembly 10 towards heaters 2 via first conduit 11.

Advantageously, the heat management system 1 further comprises heating means 17, e.g. an electric heater, fluidly interposed downstream to pumping means 16.

Consequently, the heat management system 1 comprises a fourth conduit 18 fluidly connecting the first conduit 11 downstream to pump means 16, and in particular to heating means 17 if present, to the second inlet 10c. Furthermore, heat management system 1 comprises second valve means 19b configured to regulate the fluid passage between from the first conduit 11 towards the fourth conduit 18.

The first conduit 11 is furthermore fluidly connected to front heater/cooler 3 via a fifth conduit 21. Fifth conduit 21 is joint to the first conduit 11 via third valve means 19c.

The front heater/cooler 3 is furthermore fluidly connected to second conduit 13 via a sixth conduit 22, downstream with respect to first valve means 19a. The sixth conduit 22 is furthermore fluidly connected to the third valve means 19c via a first bypass conduit 23. Third valve means 19c are therefore configured to regulate the flow from the first conduit 11 towards the sixth conduit 22 and the first bypass conduit 23.

Heat management system 1 further comprises a seventh and eight conduits 24, 25 fluidly connecting respectively the third outlet 10e and the third inlet 10f to the front heater/cooler 3. The heat management system 1 further comprises pumping means 26 configured to make circulate the operative fluid within the seventh and eight conduits 24, 25.

The heat management system 1 further comprises fourth valve means 19d configured to regulate the flow in the seventh and eight conduits 24, 25. Furthermore, the seventh and eight conduits are connected by a second bypass conduit 27. Fourth valve means 19d are therefore configured to regulate the flow between the seventh and eight conduits 24, 25.

The heat management system 1 further comprises sensor means S configured to detect the temperature in some among the conduits of the heat management system 1. This latter further comprises an electronic control unit (not shown) electrically connected to the sensor means S, comprising elaboration means to elaborate such acquired values and control consequently the operation of the valve means 19a, 19b, 19c, 19d, said heater 17 and of the heat pump assembly 10 to reach the desired temperature required by said heaters 2 or said front heater/cooler 3.

In the disclosed embodiment, the heat management module 1 comprises:
- First sensor means Sa configured to detect the temperature of the operative fluid downstream to pump means 16 and in particular to heater 17, if present;
- Second sensor means Sb configured to detect the temperature of the operative fluid downstream to pump means 26 and upstream the fourth valve means 19d; and
- Third sensor means Sc configured to detect the temperature of the operative fluid in the first conduit 11 downstream to heaters 2 and upstream to the third valve means 19c.

The operation of the above described first embodiment is described below.

According to the need of the temperature required within the interior space of the cab, the electronic control unit acquires data by sensor means and control consequently operation of pump means 16, 26, of the valve means 19 and of the heat pump assembly 10 in order to provide cool or heated water to the respective heat exchangers. Control profile to control pump means 16, 26, of the valve means 19 and of the heat pump assembly 10 depends on the temperature in the vehicle and on predetermined parameters related to the vehicle or to a chosen conditioning profile, stored in the electronic control unit. Being such relationship dependent on thermodynamic law and being variable according to the specific need, they will be no described into detail.

In particular, the heater 17 can be activated only in order to boost the already heated fluid coming through the first conduit 11. Similarly, heat pump assembly can avoid to send cooled fluid towards front heater/cooler 3.

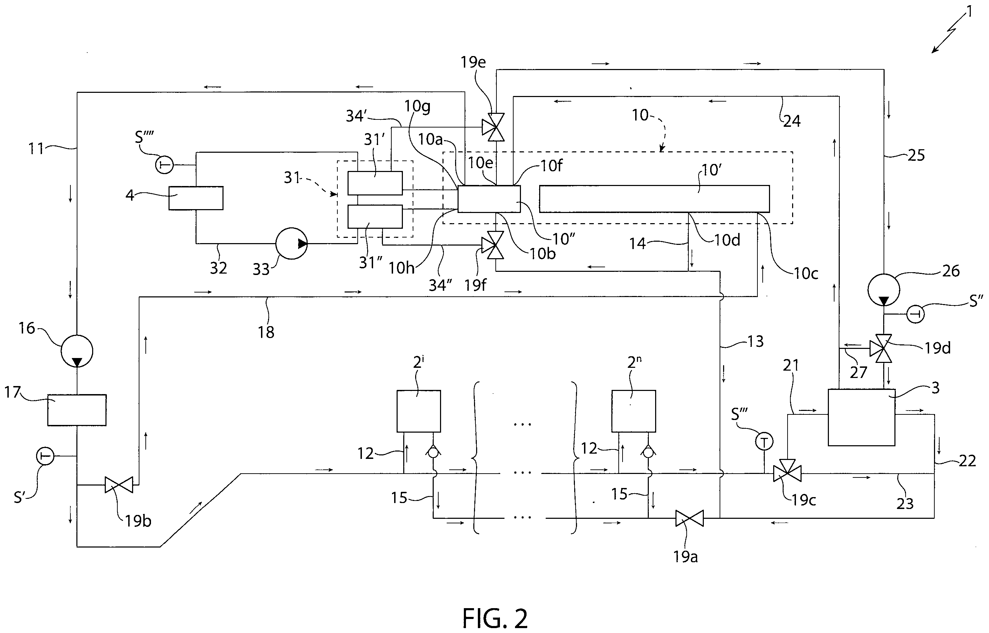

Making reference to the second embodiment (figure 2) the heat management system 1 further comprises a battery heat management portion 30 configured to exchange heat with the operative fluid via sixth conduit 24 and the second conduit 13.

In detail, the battery heat management portion 30 comprises a exchange module 31 fluidly interposed in a circulation conduit 32 fluidly connecting battery means 4 to the exchange module 31. The battery heat management portion 30 further comprises pump means 33 configured to make operative fluid circulate within the circulation conduit 32.

The operative fluid circulating into battery heat management portion 30 may be advantageously a different fluid with respect to the one circulating the remaining portion of the heat management system 1, such as a non-conductive fluid.

The battery heat management portion 30 further comprises fourth sensor means Sd configured to detect the temperature of the operative fluid downstream to the exchange module 31.

The exchange module 31 a first heat exchanger 31' and a second heat exchanger 31'', the first heat exchanger 31' being placed downstream to the second heat exchanger 31" along circulation conduit 32. In detail, first and second heat exchangers 31', 31'' are fluid-to-fluid heat exchangers.

In detail the heat management module 1 comprises a first exchange conduit 34' and a second exchange conduit 34" respectively fluidly connecting the first and second heat exchangers 31', 31'' to the heat pump assembly 10, in particular to fourth and fifth outlets 10g, 10h thereof, and to the sixth conduit 24 and the second conduit 13.

In detail, the first exchange conduit 34' and the second exchange conduit 34'' are fluidly connected to respectively the sixth conduit 24 and the second conduit 13 via fifth and sixth valve means 19e, 19f configured to regulate the fluid passage between the respective conduits.

The operation of the above described second embodiment is the following.

The operation is substantially similar to the first embodiment, in particular the electric control unit may further control pump means 33, valves 19e, 19f to cool down or heat up the fluid into circulation conduit 32 in order to cool down or heat up the battery means 4.

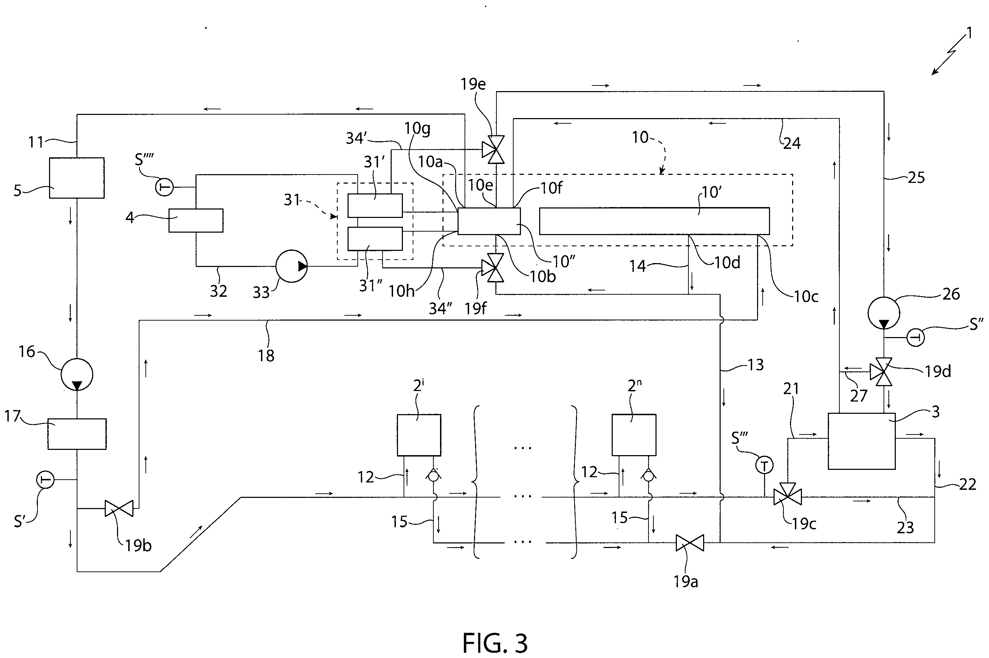

Making reference to the third embodiment (figure 3) the heat management system 1 further comprises a fuel cell module 5 fluidly interposed in the first conduit 11 upstream to pump means 16.

The heat management system 1 may further comprises a bypass conduit 5' configured to bypass fuel cell module 5, if needed. The flow into such bypass fuel cell module 5 is regulated by valves 19g, e.g. a three ways valve, configured to allow entirely, partially or deny the flow into bypass conduit 5' thereby denying or allowing partially or entirely the flow through the fuel cell module 5.

The operation of the above described third embodiment is the following.

The operation is substantially similar to the second embodiment, in particular the electric control unit may take into account the operation and needs of the fuel cell module 5 in order to control the flow via valves 19g.

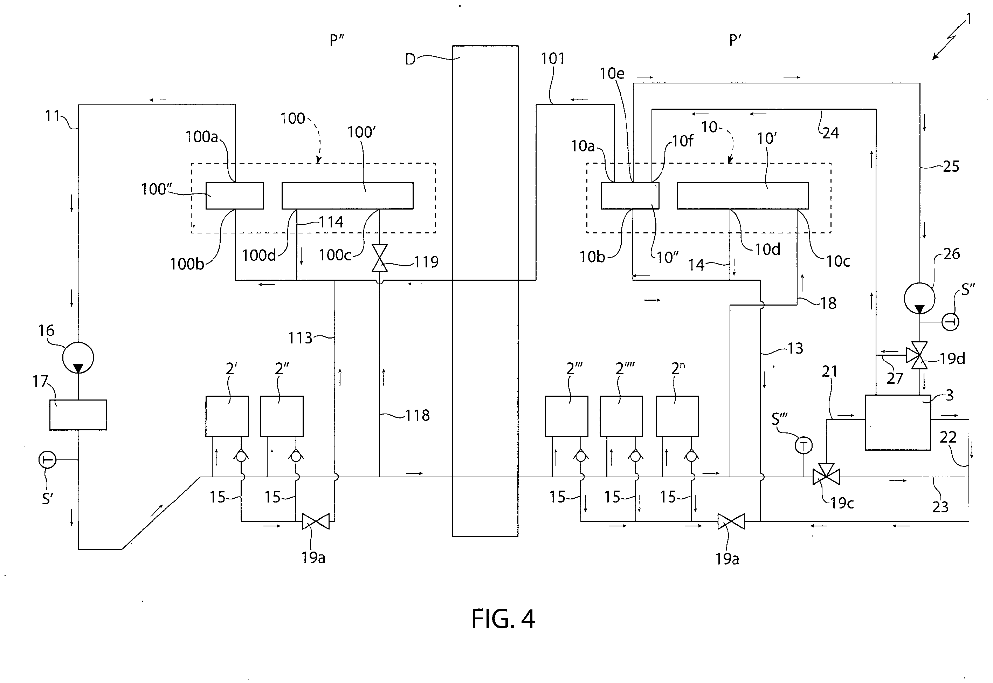

Making reference to the fourth embodiment (figure 4) the heat management system 1 comprises a pair of heat pump assemblies 10, 100 fluidly connected together between the first and the third conduits 11, 13.

Such heat management system 1 is advantageously provided for long public transport vehicles wherein the vehicle comprises a divisor D that connects two portions P', P" of the vehicle, namely a front and a rear portion thereof.

In detail, a first heat pump assembly 10 is realized similarly to the one of the first embodiment and therefore will not further be described for sake of brevity.

The second heat pump assembly 100 comprises can be realized as the first heat pump assembly 10, thereby comprising a first portion 10' and a second portion 10' and can be realized as in the exemplarily embodiment disclosed in figure 7.

In particular, the second heat pump assembly 100 defines a first outlet 100a configured to allow the exit of the operative fluid at the first temperature range value, a first inlet 100b configured to allow the entrance of the operative fluid at the second temperature range value, a second inlet 100c configured to allow the entrance of the operative fluid at the aforementioned first temperature range value, a second outlet 10d configured to allow the exit of the operative fluid at the aforementioned second temperature range value.

In detail, the first and the second heat pump assemblies 10, 100 are fluidly connected one to the other. Advantageously, the first outlet 10a of the first heat pump assembly 10 is fluidly connected to the first inlet 100b of the second heat pump assembly 100 via a connection conduit 101.

In detail, the first heat assembly 10 is located in one portion P' of the vehicle and the second heat assembly 100 is located in the other portion P''. The conduits fluidly connecting the two heat assemblies 10, 100 therefore pass through the divisor D.

The second heat assembly 100 is fluidly connected to the heaters 2', 2'', 2‴, 2‴, 2ⁿ via a first conduit 11 that is fluidly connected to first outlet 100a. In particular, heaters 2', 2", 2‴, 2‴, 2ⁿ are divided into two groups, some located in second portion P" and others located in the first portion P', all fluidly connected via respective second support conduits 15 to the respective second conduit 13, 113.

Second conduits 13, 113 are configured to fluidly connect the respective group of heaters 2 to the proper heat pump assembly 10, 100, in particular to the connection conduit 101 and the first inlet 100b thereof. Similarly, to the preceding described layout, a third conduit 114 fluidly connect the second outlet 100d to connection conduit 101.

The heat management system 1 comprises first valve means 19a fluidly interposed on the respectively second conduits 13, 113 to regulate the fluid passage therethrough.

Heat management system 1 further comprises an intermediate conduit 118 fluidly connected to first conduit 11 between the two group of heaters 2, i.e. namely downstream to the first group of heaters 2, fluidly connecting the first conduit 11 to the second inlet 100c of the second heat pump assembly 100.

In detail, the heat management system 1 comprises fifth valve means 119 fluidly interposed on the intermediate conduit 118 to regulate the flow of fluid passing therethrough.

The portion related to the first heat pump assembly 10 in the first portion P' of the vehicle is substantially similar to the precedingly described one and will be not repeated for sake of brevity, being clearly derived by provided figures.

The operation of the above described fourth embodiment is described below.

According to the need of the temperature required within the interior space of the cab, the electronic control unit acquires data by sensor means and control consequently operation of pump means 16, 26, of the valve means 19 and of the heat pump assemblies 10, 100 in order to provide cool or heated water to the respective heat exchangers. Control profile to control pump means 16, 26, of the valve means 19 and of the heat pump assemblies 10, 100 depends on the temperature in the vehicle and on predetermined parameters related to the vehicle or to a chosen conditioning profile, stored in the electronic control unit. Being such relationship dependent on thermodynamic law and being variable according to the specific need, they will be no described into detail.

In particular, the heater 17 can be activated only in order to boost the already heated fluid coming through the first conduit 11. Similarly, the first pump assembly 10 can avoid to send cooled fluid towards front heater/cooler 3.

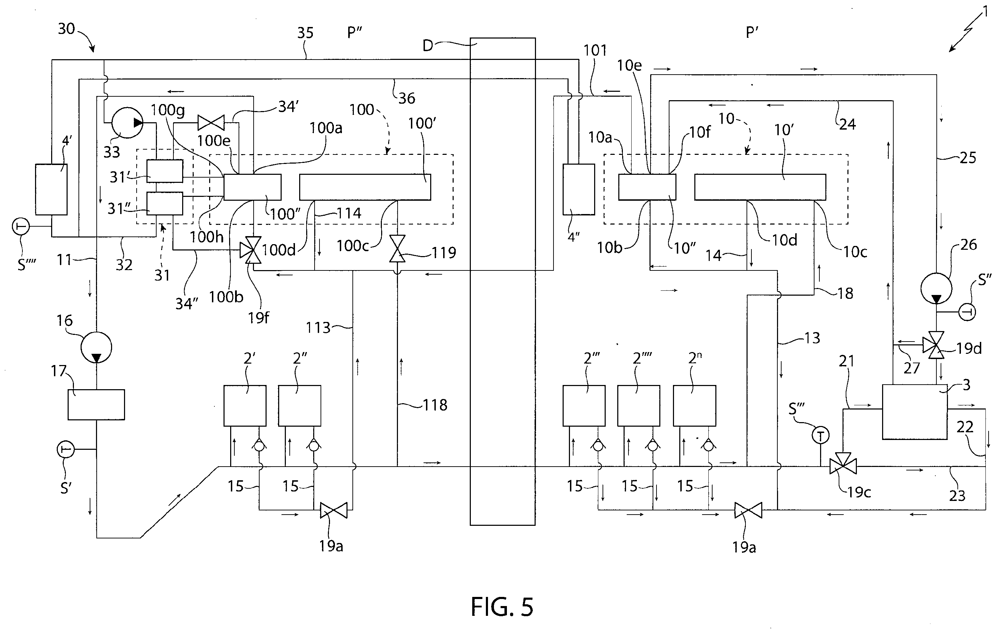

Making reference to the fifth embodiment (figure 5) the heat management system 1 is substantially a combination of the second and the fourth embodiments, i.e. further comprises a battery heat management portion 30 configured to exchange heat with one between the first and the second heat pump assemblies 10, 100.

In detail, the battery heat management portion 30 comprises an exchange module 31 fluidly interposed in a circulation conduit 32. The battery heat management portion 30 further comprises pump means 33 configured to make operative fluid circulate within the circulation conduit 32.

The operative fluid circulating into battery heat management portion 30 may be advantageously a different fluid with respect to the one circulating the remaining portion of the heat management system 1, such as a non-conductive fluid.

The battery heat management portion 30 further comprises fourth sensor means Sd configured to detect the temperature of the operative fluid downstream to the exchange module 31.

The exchange module 31 a first heat exchanger 31' and a second heat exchanger 31'', the first heat exchanger 31' being placed downstream to the second heat exchanger 31" along circulation conduit 32. In detail, first and second heat exchangers 31', 31'' are fluid-to-fluid heat exchangers.

In detail the heat management module 1 comprises a first exchange conduit 34' and a second exchange conduit 34'' respectively fluidly traversing the first and second heat exchangers 31', 31'' .

The first heat exchanger 31' is fluidly connected to a third outlet 100g of the second heat pump assembly 100 via the first exchange conduit 34' thereby providing the latter via operative fluid at the third temperature range. Fifth valve means 19e are fluidly interposed on the first exchange conduit 34' to regulate the passage of fluid therethrough.

The second heat exchanger 31" is fluidly connected to the connection conduit 101 via the second exchange conduit 34" in particular downstream to the connection with conduit 113. Such fluid connection is realized via sixth valve means 19f configured to regulate the flow of fluid flowing into second exchange conduit 34''.

In detail, in the shown embodiment, the vehicle comprises first and a second battery means 4', 4" respectively located one for each portion P', P".

The battery heat management portion 30 comprises furthermore a tenth and a eleventh conduit 35, 36, the tenth conduit 35 fluidly connect together in series the first and second battery means 4', 4" , while the eleventh conduit 36 fluidly connects second battery mean 4" to the circulation conduit 32 upstream to the first battery means 4'.

The operation of the above described fifth embodiment is the following.

The operation is substantially similar to the fourth embodiment, in particular the electric control unit may further control pump means 33, valves 19e, 19f to cool down or heat up the fluid into circulation conduit 32 in order to cool down or heat up the battery means 4.

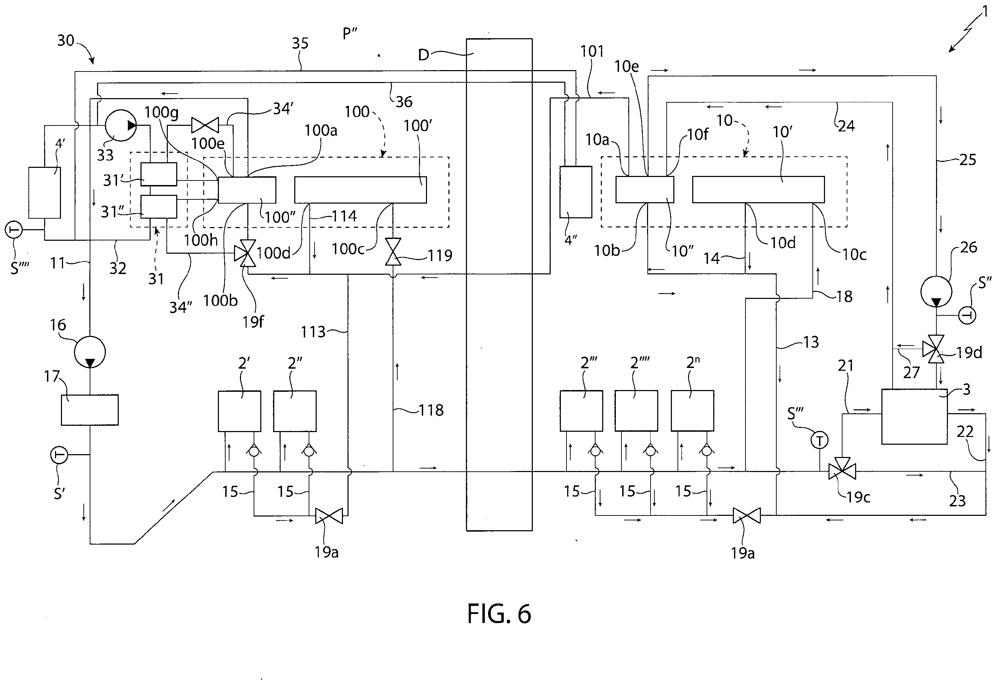

Making reference to the sixth embodiment (figure 6) the heat management system 1 is similar to the fifth embodiment except for the different fluid connection between the first and second battery means 4', 4" that is realized fluidly in parallel.

In such configuration the first battery means 4' are fluidly interposed in the circulation conduit 32 and the tenth and eleventh conduits 35, 36 fluidly connects the second battery means 4" to respectively upstream and downstream to the first battery means 4'.

The operation of the above described sixth embodiment is analogous to the one of the fifth embodiment, except for a different path of the fluid in the battery heat management portion 30.

In all the aforementioned embodiment the shown valve means are preferably electric controlled valve means and can be realized advantageously as proportional two-ways or three ways valves according to the shown topology of conduits where they are interposed.

Furthermore, heaters are advantageously configured as water-air heat exchangers wherein the air is the air of the internal space of the vehicle to be conditioned.

As said, the at least one heat pump assembly is preferably a CO2 heat pump assembly.

In view of the above, the present invention related to a method for managing a heat management system as described above and comprising the following steps:
i. Acquire data via sensor means S', S", S‴ to determine the temperature of the operative fluid;
ii. Elaborate data at step i) together with a received target conditioning request;
iii. Control consequently the pump means 16, 26, valve means 19 and the at least one heat pump assembly 10;100 according to the elaboration at step ii).

In particular, the target condition request may be imparted by the user of controlled automatically on the base of other parameters acquired by the vehicle or the environment.

In view of the foregoing, the advantages of a heat management system and a vehicle according to the invention are apparent.

Thanks to the above proposed heat management system is possible to provide a good level of conditioning within the internal space of the vehicle with a reduced energy consumption.

Indeed, the use of a heat pump assembly avoids at the same time the use of R134a operative fluid and provides a fluid conditioning in the vehicle with great efficiency. In particular, fluid R774 may be used with lower GWP.

Accordingly, the energy computation of the vehicle is reduced and it is possible to use environment friendly refrigerants.

Moreover, the proposed heat pump assembly can be used in combination with other elements such as heaters or fuel cell modules.

In addition, the proposed heat pump assembly can be doubled and used in long vehicles where there is need to provided conditioning over very long distances.

Furthermore, the conditioning of the electric batteries can be integrated into the conditioning of the internal space of the vehicle, thereby reducing costs for dedicated conditioning system and related elements and occupied space.

It is clear that modifications can be made to the described heat management system and vehicle which do not extend beyond the scope of protection defined by the claims.

For example, the topology of conduits, typology of valve and disposition of sensor means and their typology may vary.

Clearly, heaters can be of any typology and disposed in different number and location on the vehicle.

Furthermore proposed embodiments may be combined together, their combinations are not described for sake of brevity but are hereby recalled.

## Claims

1. Heat management system (1) for a vehicle provided with a plurality of first heat exchangers (2) configured to heat the air within an internal space of said vehicle and at least one second heat exchanger (3) configured to heat/cool the air within said internal space, said heat management system (1) comprising a heat pump assembly (10; 100) configured to heat up and/or cool down an operative fluid configured to flow with said heaters (2, 3) to exchange thermal energy with the air of said internal space.

2. Heat management system according to claim 1, wherein said at least one heat pump assembly (10; 100) defines a first outlet (10a; 100a) configured to allow the exit of the operative fluid at a first temperature range value, a first inlet (10b; 100b) configured to allow the entrance of the operative fluid at a second temperature range value, a second inlet (10c; 100c) configured to allow the entrance of the operative fluid at the aforementioned first temperature range value and a second outlet (10d; 100d) configured to allow the exit of the operative fluid at the aforementioned second temperature range value.

3. Heat management system, wherein said at least one heat pump assembly (10; 100) defines further defines a third outlet (10e) configured to allow the exit of the operative fluid at a third temperature range value and a third inlet (10f) configured to allow the entrance of the operative fluid at the aforementioned third temperature range value.

4. Heat management system according to claim 2, wherein said the first temperature range value has a temperature greater than the second temperature range value.

5. Heat management system according to claim 3, wherein said second temperature range value has a temperature greater than the third temperature range value.

6. Heat management system according to claim 2, comprising a first conduit (11) fluidly connecting said first outlet (10a; 100a) towards said first and second heat exchangers (2, 3) and a second conduit (13) fluidly connecting said first and second heat exchangers (2, 3) to said first inlet (10b; 100b) and pump means (16) fluidly interposed on said first conduit (11) to pump fluid towards said at least one second heat exchanger (3),
wherein each first heat exchanger (2) is fluidly connected upstream to said first conduit (11) via a first support conduit (12) and downstream to said second conduit (13) via a second support conduit (15)
said heat management system (1) further comprising a third conduit (18; 118), said third conduit (18; 118) fluidly connecting said first conduit (11) upstream to said first heat exchangers (2) to said second inlet (10c, 100c).

7. Heat management system according to claim 6, further comprising first valve means (19a) fluidly interposed on said second conduit (13; 113) downstream to said first heat exchangers (2).

8. Heat management system according to claim 6 or 7, further comprising second valve means (19b) fluidly interposed on said third conduit (18; 118).

9. Heat management system according to claim 3, wherein said second heat exchanger (3) is fluidly connected via a seventh and eight conduits (24, 25) to respectively a third inlet (10f) and a third outlet (10e) of said heat pump (10) and said heat management system (1) further comprising pump means (26) to make circulate the fluid within said seventh and eight conduits (24, 25) via said second heat exchanger (3) and said third inlet and outlet (10f, 10e).

10. Heat management system according to claim 9, further comprising a bypass conduit (27) fluidly interposed between said conduits (24, 25) via third valve means (19d), said bypass conduit (27) being configured to bypass said second heat exchanger (3).

11. Heat management system according to claim 9 or 10, wherein said second heat exchanger (3) is fluidly connected via a sixth conduit (22) to said second conduit (13) downstream to said first heat exchangers (2).

12. Heat management system according to claim 11, wherein said second heat exchanger (3) is fluidly connected by a fifth conduit (21) to said first conduit (11) downstream to said fist heat exchanger (2).

13. Heat management system according to claim 12, further comprising a by-pass conduit (23) fluidly connecting said fifth and sixth conduit (22, 21) together via interposition of fourth valve means (19d).

14. Heat management system according to any of the preceding claims depending on claim 6, further comprising a fourth conduit (14; 114) fluidly connecting said second outlet (10d; 100d) to said second conduit (13; 113) downstream to said first heat exchangers (2).

15. Heat management system according to any of the preceding claims comprising a first and a second heat pump assemblies (10, 100), fluidly connected in series one to the other with respect to the first and second heat exchangers (2, 3).

16. Heat management system according to any of the preceding claims dependent on claim 6, comprising sensor means (S', S", S‴ ) configured to detect the temperature of said operative fluid and an electronic control unit configured to acquire the data from said sensor means (S', S", S‴) and control consequently said pump means (26), said valve means (19) and said heat pump assembly (10; 100).

17. Heat management system according to any of the preceding claims, wherein said valve means are electro-actuated proportional valves.

18. Heat management system according to any of the preceding claims, wherein said operative fluid is water.

19. Heat management system according to any of the preceding claims, wherein said first conduit (11) is configured to pass through a fuel cell module (5) of said vehicle upstream to said first heat exchangers (2).

20. Heat management system according to any of the preceding claims, wherein said first conduit (11) is configured to pass through a heater (17) of said vehicle upstream to said first heat exchangers (2).

21. Heat management system according to any of the preceding claims, wherein said heat pump assembly is a CO2 heat pump assembly.

22. Method for managing a heat management system according to claim 16, when depending on claim 7, comprising the following steps:
i. Acquire data via said sensor means (S', S", S‴) to determine the temperature of said operative fluid;
ii. Elaborate data at step i) together with a received target conditioning request;
iii. Control consequently the pump means (16, 26), valve means (19) and the at least one heat pump assembly (10;100) according to the elaboration at step ii).

23. Vehicle defining an internal space for housing passengers and provided with a heat management system according to any of the preceding claims, wherein said plurality of first heat exchangers (2) are configured to heat said internal space of said vehicle and at least one second heat exchanger (3) is configured to heat/cool said internal space.
